# FASCICULE DE BREVET EUROPEEN

(11) **EP 1 197 676 B1**
(45) Date de publication et mention de la délivrance du brevet: **01.02.2006**
(21) Numéro de dépôt: 01402608.2
(22) Date de dépôt: 09.10.2001
(51) Int. Cl.: F16F 9/46, F16F 9/34

(54) **Agencement perfectionné d'amortissement des mouvements d'une masse par rapport à un support**
Verbesserte Dämpfungseinrichtung für die Bewegungen einer Masse in Bezug auf ihren Träger
Improved damping device for the movement of a mass in respect to a support

(30) Priorité: 10.10.2000 FR 0012948
(43) Date de publication de la demande: 17.04.2002
(73) Titulaire: Peugeot Citroen Automobiles SA, 92200 Neuilly sur Seine (FR)
(72) Inventeur: Abadie, Vincent, 92700 Colombes (FR)
(74) Mandataire: Bentz, Jean-Paul

(56) Documents cités:
- WO-A-89/09891
- WO-A-98/54486

## Description

La présente invention concerne un agencement d'amortissement des mouvements d'une masse par rapport à un support et, en particulier, un agencement d'amortissement des mouvements de la masse des roues et d'une partie de l'essieu d'un véhicule automobile par rapport à la caisse de celui-ci.

On connaît, par EP-A-1098109, des agencements d'amortissement du type comprenant un carter cylindrique rempli d'un fluide hydraulique dans lequel est monté un piston qui délimite, dans le carter, une première chambre et une deuxième chambre et qui est fixé à l'extrémité d'une tige axialement déplaçable dans le carter, le carter et l'autre extrémité de la tige étant destinés à être fixés l'un au support et l'autre à la masse, des moyens de mise en communication des première et deuxième chambres et un module de laminage du fluide à l'intérieur du carter qui comporte un corps délimitant intérieurement une voie d'écoulement du fluide en aval de laquelle est placé un diaphragme de laminage d'une partie du fluide et un tiroir qui comporte au moins un conduit interne et qui délimite avec le corps au moins une voie de dérivation dotée de moyens de laminage pour le laminage d'une autre partie du fluide hydraulique, le tiroir étant monté de manière mobile dans la voie d'écoulement sous l'effet d'une pression différentielle déterminée par le diaphragme, la voie d'écoulement et la voie de dérivation débouchant toutes deux dans une chambre de compensation des variations de volume interne desdites chambres sous l'effet du déplacement de la tige.

Les agencements d'amortissement de ce type présentent, d'une part, un comportement dynamique, c'est-à-dire un temps de réponse à une sollicitation, insuffisant et ne sont pas adaptés pour fournir des niveaux d'efforts et de vitesse suffisants.

La présente invention a pour but de pallier ces inconvénients.

A cet effet, l'agencement d'amortissement selon l'invention comprend les caractéristiques énoncées dans la revendication 1.

Le siège du corps a une forme complémentaire à celle de la face d'extrémité du tiroir.

En outre :
- la face d'extrémité amont du tiroir a une forme générale conique concave ;
- le conduit interne du tiroir a une forme générale évasée dans le sens d'écoulement du fluide ;
- le tiroir comporte intérieurement au moins un conduit secondaire ménagé dans la paroi constitutive du tiroir et s'étendant à partir du conduit principal vers la sortie de la voie d'écoulement de fluide ;
- le corps comporte un alésage ménagé le long de la voix d'écoulement de fluide et dans lequel est monté le tiroir, ledit alésage comportant, en son fond, un passage calibré débouchant vers le diaphragme et dont les bords périphériques amont et aval sont arrondis ;
- le corps comporte deux parties en regard dont l'une est dotée de passages débouchant dans la première chambre et équipés d'un moyen à clapet et dont l'autre a une forme générale sensiblement identique à la face d'extrémité amont du tiroir et s'étend dans le prolongement de celle-ci lorsque le tiroir se situe en position ouverte pour former, conjointement avec la partie supérieure, ladite voie de dérivation ;
- il comporte en outre un électro-aimant de commande du déplacement du diaphragme disposé dans une carcasse montée sur le carter et qui est pourvue d'un épaulement sur lequel repose le bord périphérique dudit diaphragme ;
- la carcasse comporte un noyau central disposé coaxialement à la voie d'écoulement de fluide, qui est revêtu d'une couche de matériau électriquement isolant et qui constitue une butée de limitation de l'ouverture du diaphragme ;
- le diaphragme comporte un empilage de plaques souples solidarisées pour constituer une membrane élastiquement déformable unitaire ;
- les plaques sont solidarisées par soudage, notamment par soudage laser ;
- la tige qui porte le piston est creuse, l'espace intérieur de cette tige communiquant avec la deuxième chambre, et les moyens de mise en communication des première et deuxième chambres comportent un tube coaxial à la tige et monté dans celle-ci, ce tube ayant une première extrémité ouverte placée dans la deuxième chambre et une deuxième extrémité s'étendant dans la première chambre et reliée à l'entrée du module de laminage.

D'autres caractéristiques et avantages de l'invention ressortiront de la description suivante, donnée uniquement à titre d'exemple, et faite en référence aux dessins annexés sur lesquels :
- la figure 1 est une vue en coupe axiale d'un agencement d'amortissement selon la présente invention ;
- la figure 2 est une vue à plus grande échelle de la partie inférieure II de la figure 1 ;
- la figure 3 est une vue en coupe axiale et à plus grande échelle du tiroir de l'agencement représenté sur les figures 1 et 2 ;
- la figure 4 est une vue de détail de la carcasse dans laquelle est placé l'électro-aimant ;
- les figures 5 à 8 illustrent différents modes de réalisation du diaphragme conforme à l'invention ;
- la figure 9 est une vue en coupe des diaphragmes visibles sur les figures 5 à 8 ;
- la figure 10 est un diagramme illustrant la plage de fonctionnement de l'agencement d'amortissement selon l'invention ; et
- la figure 11 montre une courbe illustrant la dynamique de réponse de l'agencement d'amortissement selon l'invention.

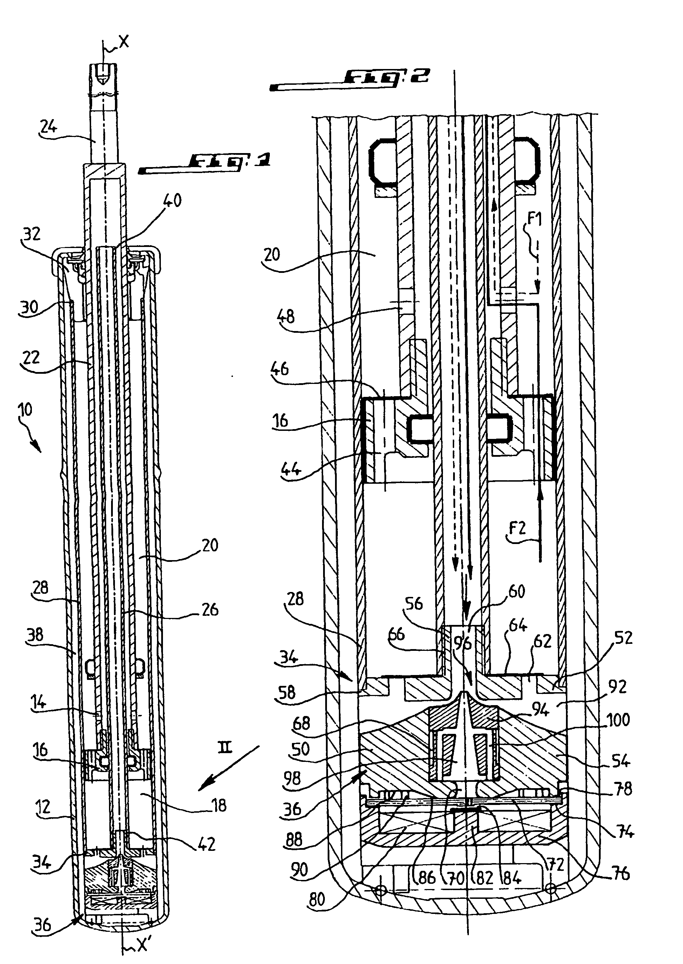

Sur la figure 1, on a représenté un agencement d'amortissement selon l'invention, désigné par la référence numérique générale 10.

Cet agencement est destiné à constituer un élément de suspension d'un véhicule automobile.

Il comporte un axe de symétrie X-X' supposé vertical.

L'agencement 10 comporte principalement un carter 12 généralement cylindrique rempli d'un fluide hydraulique approprié pour l'utilisation envisagée, qui est par exemple monté sur la masse des roues et d'une partie de l'essieu d'un véhicule automobile (non représentée); et une tige 14 montée axialement déplaçable dans le carter 12, par exemple montée sur la caisse du véhicule (non représentée), et à laquelle est fixé un piston 16 qui délimite, dans le carter 12, une première chambre 18 et une deuxième chambre 20.

La tige 14 comporte deux parties axialement alignées, à savoir une partie tubulaire inférieure 22 majoritairement engagée dans le carter 12, et une deuxième partie 24, supérieure, pourvue de moyens de fixation de l'agencement sur la masse suspendue du véhicule.

Le piston 16 coulisse par ses faces intérieure et extérieure entre deux éléments tubulaires coaxiaux placés dans le carter 12, respectivement un tube intérieur 26, qui s'étend à l'intérieur de la tige 22 entre les deux chambres, et une chemise extérieure 28 dont une première extrémité supérieure 30 est fixée sur un bouchon 32 de fermeture du carter 12 et dont l'autre extrémité inférieure 34 est montée sur un module de laminage 36 du fluide dans le carter 12.

Comme on le voit sur cette figure 1, la surface périphérique externe de la chemise 28 a un diamètre inférieur à la surface périphérique interne de la paroi constitutive du carter 12 de manière à délimiter une chambre périphérique annulaire 38 de compensation des variations du volume total des première et deuxième chambres engendrées lors du déplacement de la tige 22 dans le carter 12, comme cela sera décrit par la suite.

L'agencement 10 est également doté de moyens permettant le transfert du fluide hydraulique entre les première et deuxième chambres 18 et 20 et la chambre de compensation 38.

A cet effet, le tube intérieur 26 présente une première extrémité supérieure 40 ouverte et une extrémité inférieure 42 qui est fixée à et qui communique avec le module de laminage 36.

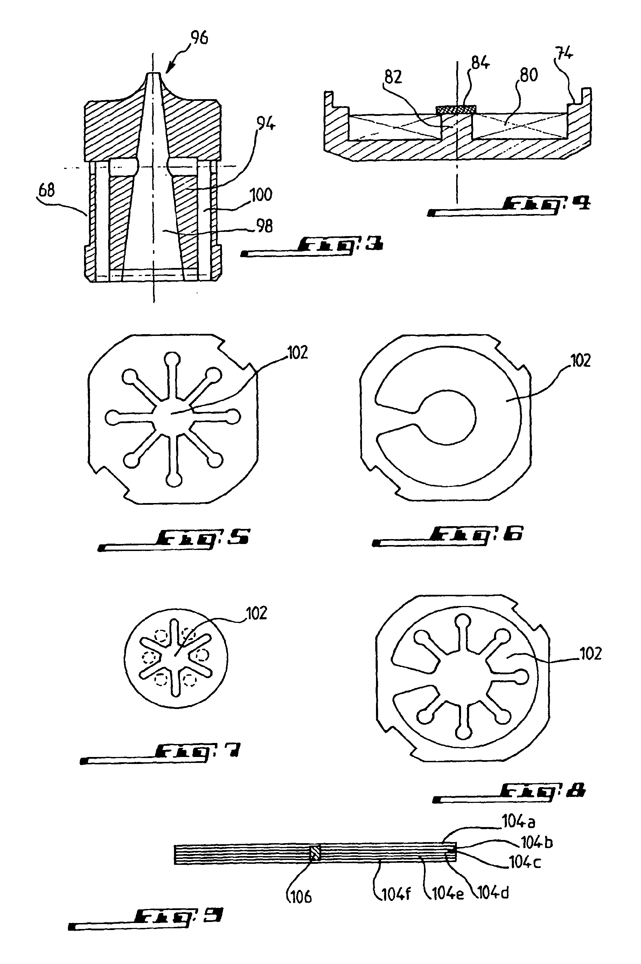

Le piston 16 est doté de canaux, tels que 44 (figure 2), de mise en communication des première et deuxième chambres 18 et 20 équipés de moyens à clapet 46 passant de la première chambre 18 vers la deuxième chambre 20.

La paroi constitutive de la tige 14 est dotée d'orifices, tels que 48, de mise en communication de la deuxième chambre 20 avec le volume interne de cette tige 14 et, par l'intermédiaire de la canalisation formée par le tube intérieur 26, qui communique, par son extrémité supérieure ouverte 40, avec le volume interne de la tige 14, avec le module de laminage 36.

En référence à la figure 2, le module 36 de laminage est, quant à lui, doté d'un ensemble de voies ou de conduits d'écoulement de fluide permettant, d'une part, le passage du fluide hydraulique du tube intérieur 26 vers la chambre de compensation 38 et, d'autre part, du tube intérieur 26 vers la première chambre 18, en passant par la chambre de compensation 38.

Le module de laminage 36 comporte un corps 50 constitué d'une première partie supérieure 52 et d'une deuxième partie inférieure 54, éventuellement réalisées sous la forme d'une unique pièce massive.

La première partie 52 est dotée d'un prolongement cylindrique axial 56 s'étendant vers le haut dans l'extrémité inférieure 42 du tube intérieur 26 et d'une gorge périphérique 58 dans laquelle vient se monter l'extrémité inférieure 34 de la chemise 28.

Le prolongement cylindrique axial 56 délimite, intérieurement, un passage 60.

Par ailleurs, la partie supérieure 52 est pourvue d'un certain nombre de canaux axiaux, tels que 62, débouchant dans la première chambre 18 et régulièrement répartis autour de son axe. Elle est recouverte par une plaque annulaire 64 qui constitue un clapet d'ouverture et de fermeture de ces canaux 62, ce clapet étant passant en direction de la première chambre 18. La plaque annulaire 64 est également dotée d'un prolongement cylindrique axial 66 venant s'interposer entre le prolongement 56 du corps supérieur 52 et le tube 14.

La partie inférieure 54, quant à elle, est dotée d'un alésage central 68 et, en son fond, d'un passage axial 70 en aval duquel est placé un diaphragme 72 de laminage d'une première partie du fluide circulant à travers le carter 12.

On notera que pour faciliter l'écoulement du fluide, les bords amont et aval du passage 70 sont arrondis.

Le diaphragme 72 repose, par son bord périphérique, sur un épaulement annulaire 74 d'une carcasse inférieure 76 qui vient se monter sur la partie inférieure 54 du corps 50.

Ce dernier présente, sur sa face d'extrémité inférieure, une saillie annulaire 78 complémentaire venant prendre appui sur le bord périphérique du diaphragme 72. Ce dernier n'est maintenu que par son bord périphérique, sa zone radialement interne étant susceptible de se déplacer sous la commande d'un électro-aimant 80 placé dans le fond de la carcasse 76, laquelle comporte un noyau central 82 s'étendant verticalement et muni d'un revêtement électriquement isolant 84 constituant une butée de limitation du déplacement du diaphragme 72 dans le sens de l'ouverture.

On voit par ailleurs sur la figure 2 que la face d'extrémité inférieure du corps 50 comporte une première zone 86 de forme générale tronconique s'étendant à partir du passage 70 et prolongée extérieurement par une deuxième partie 88 de forme générale annulaire laquelle comporte, sur sa périphérie, la saillie annulaire 78.

La paroi constitutive de cette dernière est percée d'orifices, tel que 90, débouchant dans la chambre de compensation 38.

On notera que les passages 60 et 70 du corps 50 et l'alésage 68 s'étendent de façon coaxiale et délimitent une voie d'écoulement de fluide vers la chambre de compensation 38, en passant par les orifices 90.

Par ailleurs, les parties supérieure et inférieure du corps 50 délimitent, conjointement, une ou plusieurs voies de dérivation 92, débouchant dans la chambre de compensation 38. Ces voies s'étendent en aval du passage 60 de la partie supérieure du corps et communiquent avec les canaux 62.

Un tiroir 94 est monté axialement déplaçable dans l'alésage 68 sous l'effet de la pression différentielle engendrée par la position du diaphragme 72 entre une position haute, non représentée, dans laquelle les voies de dérivation 92 sont obturées, et dans laquelle le tiroir 94 repose sur un siège délimité par la face inférieure de la partie supérieure du corps 50, et une position basse dans laquelle les voies 92 sont ouvertes, visible sur la figure 2.

Le tiroir 94 a une forme générale cylindrique et comporte une face d'extrémité supérieure 96 de sections en coupe transversale croissantes vers l'aval, en considérant le sens d'écoulement du fluide, c'est-à-dire vers le bas de la figure 2.

De préférence, cette face supérieure 96 du tiroir 94 est conique concave.

Le tiroir 94 est muni d'un conduit interne 98 de transfert de fluide coaxial à la voie d'écoulement, ce conduit 98 ayant une forme évasée dans le sens d'écoulement du fluide, c'est-à-dire vers le bas de la figure 2, et débouche dans le canal 70.

Dans le but de diminuer sa masse totale et donc d'améliorer le comportement de l'agencement en facilitant son déplacement, le tiroir 94 est également doté d'un ou de plusieurs conduits secondaires, tels que 100, ménagés dans sa paroi constitutive et s'étendant à partir du conduit principal 98 vers la sortie de la voie d'écoulement de fluide, c'est-à-dire vers le canal 70.

Dans le but d'améliorer l'écoulement de fluide vers la chambre de compensation 38, la face supérieure de la partie inférieure 54 du corps 50 présente une forme complémentaire de celle de la face supérieure 96 du tiroir 94. Plus précisément, elle a une forme générale tronconique complémentaire de celle de la face supérieure 96 du tiroir 94 de sorte que, en position ouverte de ce dernier, les surfaces supérieures du tiroir et de la partie inférieure 54 du corps sont dans le prolongement l'une de l'autre et le fluide circulant dans les voies de dérivation ne rencontre aucune discontinuité de surface. En outre la face inférieure de la partie supérieure 52 du corps est conformée pour que ces voies de dérivation 92 présentent des dimensions croissantes selon une direction radialement externe.

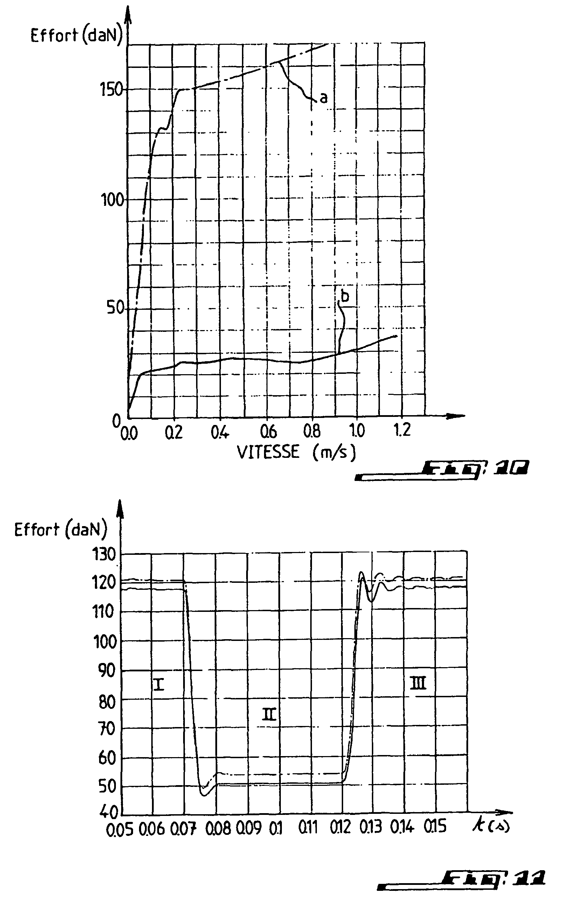

En se référant maintenant aux figures 5 à 8, on voit que le diaphragme 72 peut présenter différentes formes.

Dans ces différents modes de réalisation, ce diaphragme comporte un passage 102 permettant l'écoulement de fluide.

En référence à la figure 9, le diaphragme 72 est constitué par une association de plaques 104a, 104b, 104c, 104d, 104e et 104f solidarisées pour constituer une membrane élastiquement déformable unitaire.

De préférence, ces plaques sont solidarisées par soudage, notamment par soudage laser. Pour procéder à ce soudage, on utilise par exemple un pion central 106 perdu sur lequel viennent se souder les plaques 104a à 104f.

On décrira ci-après le fonctionnement de l'agencement d'amortissement 10 qui vient d'être décrit.

Lors d'une phase de détente, c'est-à-dire lorsque le piston 16 monte, du fluide hydraulique enfermé dans la deuxième chambre 20 est évacué de cet espace en passant à travers les orifices 48, comme représenté par la flèche F1, le volume intérieur de la tige 22, et l'extrémité supérieure ouverte 40 du tube 26 jusqu'au module de laminage 36.

Dans ce dernier, une partie du fluide s'écoule dans la voie d'écoulement, c'est-à-dire le long du conduit interne 98 du tiroir 94 et du passage 70, puis est laminée, de façon connue en soi, par le diaphragme de laminage 72. En aval, il circule alors, à travers les orifices 90, vers la chambre de compensation 38, puis vers la première chambre 18.

Par ailleurs, une deuxième partie du fluide s'écoule dans la ou les voies de dérivation 92 en étant laminée entre l'arrête arrondie de la partie supérieure 52 du corps 50 et la face supérieure 96 du tiroir 94, puis vers la première chambre 18, à travers le clapet 64.

Lors d'une phase de compression, le fluide hydraulique est évacué de la première chambre 18 à travers les canaux 44 ménagés dans le piston 16, comme représenté par la flèche F2, puis, comme mentionné précédemment, s'écoule à travers la tige 14 et le tube 26 vers le module de laminage.

Dans ce dernier, une partie du fluide s'écoule à travers la voie d'écoulement, en direction du diaphragme 72 de laminage et vers la chambre de compensation 38 en passant par les orifices 90, tandis qu'une autre partie du fluide est laminée en s'écoulant dans les voies de dérivation 92 vers la chambre de compensation 38, le clapet 64 porté par la partie supérieure 52 du corps 50 étant fermé.

On notera que lors de cette phase, le volume de fluide s'écoulant vers la chambre de compensation correspond au volume de fluide déplacé par la tige 14 au cours de son mouvement.

Comme mentionné précédemment, au cours de ces phases de détente et de compression, comme cela est classique, la position du tiroir 94 est commandée par la position du diaphragme 72 qui règle le niveau de pression dans la voie d'écoulement du fluide. Ce niveau de pression engendre, sur les faces mutuellement opposées du tiroir 94 des efforts de valeurs différentes et donc un déplacement consécutif du tiroir.

Lorsque le tiroir se situe en position haute, c'est-à-dire lorsqu'il est en appui sur le siège porté par la partie supérieure 52 du corps 50, le fluide est laminé par le diaphragme de laminage 72.

Lorsque le tiroir 94 se situe en position basse, une partie du fluide est laminée par le diaphragme de laminage 72, l'autre partie étant laminée entre le bord aval du passage 60 et la surface supérieure du tiroir 94.

On notera que les surfaces en regard du tiroir et du corps 50 sont arrondies. De même, les bords amont et aval du passage 70 sont arrondis. On facilite alors grandement l'écoulement de fluide dans la voie de dérivation et vers le diaphragme dans la mesure où l'on limite les turbulences.

On élimine également les perturbations lors de l'ouverture des voies de dérivation 92.

Par ailleurs, on conçoit que, de même, la forme évasée du conduit 98 du tiroir 94 permet de faciliter grandement l'écoulement du fluide dans ce dernier, en limitant les turbulences dans ce conduit, et d'éviter l'apparition de toute perte de charge parasite.

On notera par ailleurs que la présence de conduits secondaires dans la paroi constitutive du tiroir 94 permet de réduire considérablement la masse totale de ce dernier. Ces caractéristiques combinées permettent donc d'améliorer considérablement la dynamique de l'agencement d'amortissement selon l'invention comme on le voit sur les figures 10 et 11.

La figure 10 donne les caractéristiques de fonctionnement effort-vitesse du dispositif objet de l'invention. La courbe a correspond à l'état "dur", c'est-à-dire à un amortissement maximal, le courant dans l'électroaimant étant nul, tandis que la courbe b correspond à l'état "souple", c'est-à-dire à un amortissement minimal, le courant dans l'électroaimant étant de 5 ampères : on voit que la plage de fonctionnement de l'agencement selon l'invention est relativement élevée.

La figure 11 représente la réponse en termes d'effort, en fonction du temps, de l'agencement d'amortissement selon l'invention lorsqu'on fait varier le courant dans l'électroaimant. Les phases I et III correspondent à un courant nul, donc à un amortissement maximal, tandis que la phase II correspond à un courant de 5 ampères, donc à un amortissement minimal : on voit que l'agencement selon l'invention présente une dynamique de réponse élevée.

On constate enfin que cet agencement présente une bonne répétitivité des niveaux d'effort obtenus sous l'effet de variations croissantes ou décroissantes du courant d'excitation alimentant l'électro-aimant.

## Revendications

1. Agencement d'amortissement, des mouvements d'une masse par rapport à un support, comportant un carter cylindrique (12) rempli d'un fluide hydraulique dans lequel est monté un piston (16) qui délimité, dans le carter, une première chambre (18) et une deuxième chambre (20) et qui est fixé à une extrémité d'une tige (14) axialement déplaçable dans le carter, le carter et l'autre extrémité de la tige (14) étant destinés à être fixés l'un au support et l'autre à la masse, des moyens de mise en communication des première et deuxième chambres et un module de laminage (36) du fluide à l'intérieur du carter qui comprend un corps (50) monté sur le carter et délimitant intérieurement une voie d'écoulement de fluide en aval de laquelle est placé un diaphragme (72) de laminage d'une partie du fluide hydraulique et un tiroir (94) qui comporte au moins un conduit interne et qui délimite, avec le corps, au moins une voie de dérivation (92) dotée de moyens de laminage pour le laminage d'une autre partie du fluide hydraulique, le tiroir étant monté de manière mobile dans la voie d'écoulement du corps sous l'effet d'une pression différentielle déterminée par le diaphragme (72), la voie d'écoulement et la voie de dérivation débouchant toutes deux dans une chambre (38) de compensation des variations de volume interne desdites chambres sous l'effet du déplacement de la tige (14), le tiroir (94) comporte une face d'extrémité amont (96) de sections en coupe transversale croissantes vers l'aval de manière à faciliter l'écoulement du fluide, et le corps (50) comporte un siège sur lequel repose la face d'extrémité du tiroir (94) dans une position d'obturation de la ou de chaque voie de dérivation.

2. Agencement d'amortissement selon la revendication 1, **caractérisé en ce que** le siège du corps (50) a une forme complémentaire à celle de la face d'extrémité du tiroir (94).

3. Agencement d'amortissement selon la revendication 1, **caractérisé en ce que** la face d'extrémité amont du tiroir (94) a une forme générale conique concave.

4. Agencement d'amortissement selon l'une quelconque des revendications 1 à 3, **caractérisé en ce que** le conduit interne du tiroir (94) a une forme générale évasée dans le sens d'écoulement du fluide.

5. Agencement d'amortissement selon l'une quelconque des revendications 1 à 4, **caractérisé en ce que** le tiroir (94) comporte intérieurement au moins un conduit secondaire (100) ménagé dans la paroi constitutive du tiroir et s'étendant à partir du conduit principal vers la sortie de la voie d'écoulement de fluide.

6. Agencement d'amortissement selon l'une quelconque des revendications 1 à 5, **caractérisé en ce que** le corps (50) comporte un alésage (68) ménagé le long de la voie d'écoulement de fluide et dans lequel est monté le tiroir, ledit alésage comportant, en son fond, un passage calibré débouchant vers le diaphragme et dont les bords périphériques amont et aval sont arrondis.

7. Agencement d'amortissement selon l'une quelconque des revendications 1 à 6, **caractérisé en ce que** le corps (50) comporte deux parties (52, 54) en regard dont l'une est dotée de passages (62) débouchant dans la première chambre et équipés d'un moyen à clapet (64) et dont l'autre a une forme générale sensiblement identique à la face d'extrémité amont du tiroir et s'étend dans le prolongement de celle-ci lorsque le tiroir se situe en position ouverte pour former, conjointement avec la partie supérieure (52), ladite voie de dérivation.

8. Agencement d'amortissement selon l'une quelconque des revendications 1 à 7, **caractérisé en ce qu'**il comporte en outre un électro-aimant (80) de commande du déplacement du diaphragme disposé dans une carcasse (76) montée sur le carter et qui est pourvue d'un épaulement sur lequel repose le bord périphérique dudit diaphragme.

9. Agencement d'amortissement selon la revendication 8, **caractérisé en ce que** la carcasse (76) comporte un noyau central (82) disposé coaxialement à la voie d'écoulement de fluide, qui est revêtu d'une couche (84) de matériau électriquement isolant et qui constitue une butée de limitation de l'ouverture du diaphragme.

10. Agencement d'amortissement selon l'une quelconque des revendications 1 à 9, **caractérisé en ce que** le diaphragme (72) comporte un empilage de plaques souples solidarisées pour constituer une membrane élastiquement déformable unitaire.

11. Agencement d'amortissement selon la revendication 10, **caractérisé en ce que** les plaques sont solidarisées par soudage, notamment par soudage laser.

12. Agencement d'amortissement selon l'une quelconque des revendications 1 à 11, **caractérisé en ce que** la tige (14) qui porte le piston est creuse, **en ce que** l'espace intérieur de cette tige communique avec la deuxième chambre (20), et **en ce que** les moyens de mise en communication des première et deuxième chambres comportent un tube (26) coaxial à la tige et monté dans celle-ci, ce tube ayant une première extrémité ouverte placée dans la deuxième chambre (20) et une deuxième extrémité s'étendant dans la première chambre et reliée à l'entrée du module de laminage (36).

## Patentansprüche

1. Vorrichtung zur Dämpfung der Bewegungen einer Masse im Verhältnis zu einem Träger, umfassend ein mit einer Hydraulikflüssigkeit gefülltes zylindrisches Gehäuse (12), in dem ein Kolben (16) montiert ist, der in dem Gehäuse eine erste Kammer (18) und eine zweite Kammer (20) begrenzt und der an einem Ende einer axial im Gehäuse verschiebbaren Stange (14) befestigt ist, wobei das Gehäuse und das andere Ende der Stange (14) dazu bestimmt sind, am Träger bzw. an der Masse befestigt zu werden, Mittel zum Herstellen einer Verbindung zwischen der ersten und der zweiten Kammer und ein Drosselmodul (36) für die Flüssigkeit im Inneren des Gehäuses, das einen am Gehäuse angebrachten und im Inneren einen Abflußkanal für die Flüssigkeit begrenzenden Hauptteil (50) umfaßt, von dem aus in Abwärtsrichtung der Strömung ein Plattenventil (72) zum Drosseln eines Teils der Hydraulikflüssigkeit und ein Schieber (94) angeordnet sind, wobei der Schieber zumindest einen Innenkanal aufweist und zusammen mit dem Hauptteil zumindest einen mit Drosselungsmitteln zum Drosseln eines anderen Teils der Hydraulikflüssigkeit versehenen Abzweigungskanal (92) begrenzt und so in dem Abflußkanal des Hauptteils montiert ist, daß er unter der Wirkung eines von dem Plattenventil (72) bestimmten Differentialdrucks beweglich ist, wobei der Abflußkanal und der Abzweigungskanal beide in eine Kammer (38) zum Ausgleich des sich unter der Wirkung der Verschiebung der Stange (14) verändernden inneren Rauminhalts der Kammern münden, wobei der Schieber (94) eine in Aufwärtsrichtung der Strömung befindliche Endfläche (96) aus in Abwärtsrichtung der Strömung derart größer werdenden Querschnitten umfaßt, daß der Abfluß der Flüssigkeit erleichtert wird, und wobei der Hauptteil (50) einen Sitz umfaßt, auf dem die Endfläche des Schiebers (94) in einer Stellung zum Verschließen des einzelnen oder aller Abzweigungskanäle ruht.

2. Dämpfungsvorrichtung nach Anspruch 1, **dadurch gekennzeichnet, daß** der Sitz des Hauptteils (50) eine zur Form der Endfläche des Schiebers (94) komplementäre Form aufweist.

3. Dämpfungsvorrichtung nach Anspruch 1, **dadurch gekennzeichnet, daß** die in Aufwärtsrichtung der Strömung befindliche Endfläche des Schiebers (94) eine allgemein konische konkave Form aufweist.

4. Dämpfungsvorrichtung nach einem der Ansprüche 1 bis 3, **dadurch gekennzeichnet, daß** der Innenkanal des Schiebers (94) eine in Strömungsrichtung der Flüssigkeit allgemein trichterförmig erweiterte Form aufweist.

5. Dämpfungsvorrichtung nach einem der Ansprüche 1 bis 4, **dadurch gekennzeichnet, daß** der Schieber (94) im Inneren zumindest einen sekundären Kanal (100) umfaßt, der in der den Schieber bildenden Wand ausgeführt ist und sich vom Hauptkanal aus ausgehend zum Ausgang des Abflußkanals der Flüssigkeit erstreckt.

6. Dämpfungsvorrichtung nach einem der Ansprüche 1 bis 5, **dadurch gekennzeichnet, daß** der Hauptteil (50) eine entlang des Abflußkanals der Flüssigkeit eingearbeitete Bohrung (68) umfaßt, in der der Schieber montiert ist, wobei die Bohrung an ihrer Unterseite einen genau auf Maß gearbeiteten Durchlaß umfaßt, der in das Plattenventil mündet und dessen Ränder in Aufwärtsrichtung und in Abwärtsrichtung der Strömung am Umfang verrundet sind.

7. Dämpfungsvorrichtung nach einem der Ansprüche 1 bis 6, **dadurch gekennzeichnet, daß** der Hauptteil (50) zwei einander gegenüberliegende Teile (52, 54) umfaßt, von denen der eine mit Durchlässen (62), die in die erste Kammer münden, und mit einem Ventilmittel (64) versehen sind, und von denen der andere eine allgemeine Form aufweist, die im wesentlichen gleich der Form der in Aufwärtsrichtung der Strömung befindlichen Endfläche des Schiebers ist und sich in deren Verlängerung erstreckt, wenn der Schieber sich in der geöffneten Stellung befindet, um gemeinsam mit dem oberen Teil (52) den Abzweigungskanal zu bilden.

8. Dämpfungsvorrichtung nach einem der Ansprüche 1 bis 7, **dadurch gekennzeichnet, daß** sie weiterhin einen Elektromagneten (80) zur Steuerung der Verschiebung des in einem auf dem Gehäuse montierten Rahmen (76) angeordneten Plattenventils umfaßt, wobei der Rahmen mit einem Absatz versehen ist, auf dem der umlaufende Rand des Plattenventils ruht.

9. Dämpfungsvorrichtung nach Anspruch 8, **dadurch gekennzeichnet, daß** der Rahmen (76) einen zum Abflußkanal der Flüssigkeit koaxial angeordneten mittigen Kern (82) umfaßt, der mit einer Schicht (84) aus elektrisch isolierendem Material überzogen ist und der einen Anschlag zum Begrenzen der Öffnung des Plattenventils bildet.

10. Dämpfungsvorrichtung nach einem der Ansprüche 1 bis 9, **dadurch gekennzeichnet, daß** das Plattenventil (72) aneinander befestigte, übereinandergestapelte biegsame Platten zur Bildung einer einheitlichen, elastisch verformbaren Membran umfaßt.

11. Dämpfungsvorrichtung nach Anspruch 10, **dadurch gekennzeichnet, daß** die Platten durch Schweißen, insbesondere durch Laserschweißen, aneinander befestigt sind.

12. Dämpfungsvorrichtung nach einem der Ansprüche 1 bis 11, **dadurch gekennzeichnet, daß** die den Kolben tragende Stange (14) hohl ist, **dadurch**, daß der Innenraum dieser Stange mit der zweiten Kammer (20) in Verbindung steht, und **dadurch**, daß die Mittel zur Herstellung der Verbindung zwischen der ersten und der zweiten Kammer ein zur Stange koaxiales und in dieser montiertes Rohr (26) umfassen, wobei dieses Rohr ein offenes, in der zweiten Kammer (20) angeordnetes erstes Ende und ein sich in die erste Kammer erstreckendes und mit dem Einlaß des Drosselmoduls (36) verbundenes zweites Ende umfaßt.

## Claims

1. A device for damping the movements of a mass in relation to a support, featuring: a cylindrical housing (12) filled with a hydraulic fluid in which a piston (16) is mounted which delimits, in the housing, a first chamber (18) and a second chamber (20) and which is fixed to one end of a connecting rod (14) which is adapted to be displaced axially within the housing, the housing and the other end of the connecting rod (14), respectively, being designed to be fixed respectively to the support and to the mass; means providing communication between the first and second chambers and a unit (36) for laminating the fluid inside the housing and featuring a body (50) mounted on the housing and internally delimiting a fluid outflow conduit downstream of which is positioned a diaphragm (72) for laminating a proportion of the hydraulic fluid and a slide valve (94) which features at least one internal duct and which delimits, with the body, at least one branch conduit (92) equipped with lamination means for laminating another proportion of the hydraulic fluid, the slide valve being mounted so as to be able to move in the body's flow conduit under the effect of a differential pressure determined by the diaphragm (72), the flow conduit and the branch conduit, both of which open out into a chamber (38) compensating for variations in the internal volume of said chambers under the effect of the displacement of the connecting rod (14); the slide valve (92) features an upstream end face (96) having increasing cross-sections in the downstream direction so as to facilitate the outflow of the fluid; and the body (50) features a seat upon which the end face of the slide valve (94) rests in a position in which the or each branch conduit is occluded.

2. Damping device according to claim 1, **characterised in that** the seat of the body (50) has a complementary shape to that of the end face of the slide valve (94).

3. Damping device according to claim 1, **characterised in that** the upstream end face of the slide valve (94) has a concave conical shape overall.

4. Damping device according to any one of claims 1 to 3, **characterised in that** the internal duct of the slide valve (94) has an overall flared shape in the direction of the fluid's flow.

5. Damping device according to any one of claims 1 to 4, **characterised in that** internally the slide valve (94) features at least one secondary duct (100) incorporated in the structural wall of the slide valve and extending from the main duct to the outlet of the fluid outflow conduit.

6. Damping device according to any one of claims 1 to 5, **characterised in that** the body (50) features a bore (68) incorporated along the fluid outflow conduit and in which the slide valve is mounted, said bore featuring, in its base, a calibrated passage which opens out towards the diaphragm and the upstream and downstream peripheral edges of which are rounded.

7. Damping device according to any one of claims 1 to 6, **characterised in that** the body (50) features two facing portions (52, 54), one of which is equipped with passages (62) which open out into the first chamber and which are fitted with a shut-off means (64), and the other of which has a substantially identical overall shape to the upstream end face of the slide valve and extends into the prolongation thereof when the slide valve is in the open position so as to form, jointly with the upper portion (52), said branch conduit.

8. Damping device according to any one of claims 1 to 7, **characterised in that** it furthermore features an electromagnet (80) for controlling the displacement of the diaphragm disposed in a mount (76) affixed on the housing and which is provided with a shoulder upon which the peripheral edge of said diaphragm rests.

9. Damping device according to claim 8, **characterised in that** the mount (76) features a central core (82) disposed coaxially to the fluid outflow conduit, which is covered by a layer (84) of an electrical insulator and which constitutes a limit stop for the opening of the diaphragm.

10. Damping device according to any one of claims 1 to 9, **characterised in that** the diaphragm (72) features a stack of flexible plates which are connected to be constrained to move with one another so as to constitute a unitary elastically deformable membrane.

11. Damping device according to claim 10, **characterised in that** the plates are connected to be constrained to move with one another by welding, notably by laser welding.

12. Damping device according to any one of claims 1 to 11, **characterised in that** the connecting rod (14) which carries the piston is hollow, that the internal space of said connecting rod communicates with the second chamber (20), and that the means for providing communication between the first and second chambers feature a tube (26) coaxial with the connecting rod and mounted inside the latter, said tube having a first open end positioned in the second chamber (20) and a second end which extends into the first chamber and is joined to the inlet of the lamination unit (36).
